# EUROPEAN PATENT SPECIFICATION

(11) **EP 3 589 682 B1**
(45) Date of publication and mention of the grant of the patent: **27.01.2021**
(21) Application number: 18719324.8
(22) Date of filing: 27.02.2018
(51) Int. Cl.: C08J 5/00, C08K 3/04

(54) **MANUFACTURE METHOD OF NANOMATERIAL WITH ANTIBACTERIAL PROPERTIES, THE MATERIAL THEREOF, AND ITS USE**
VERFAHREN ZUR HERSTELLUNG VON NANOMATERIAL MIT ANTIBAKTERIELLEN EIGENSCHAFTEN, MATERIAL DAFÜR UND VERWENDUNG DAVON
PROCÉDÉ DE FABRICATION D'UN NANOMATÉRIAU AYANT DES PROPRIÉTÉS ANTIBACTÉRIENNES, MATÉRIAU À BASE DE CELUI-CI, ET SON UTILISATION

(30) Priority: 02.03.2017 SK 500172017
(43) Date of publication of application: 08.01.2020
(73) Proprietor: Ústav Polymérov Sav, 845 41 Bratislava (SK)
(72) Inventor: SPITALSKY, Zdenko, 841 01 Bratislava 42 (SK); MARKOVIC, Zoran, 110 00 Belehrad (RS); KOVACOVA, Maria, 023 02 Krasno nad Kysucou (SK)
(74) Representative: Wörz, Volker Alfred
(86) International application number: PCT/SK2018/050004
(87) International publication number: WO 2018/160142

(56) References cited:
- EP-A1- 2 883 835
- WO-A2-2016/025051

## Description

### Technical field

Present invention is dealing with hybrid nanomaterials with antibacterial properties and method for production of thereof, and their use as antibacterial applications.

### Background art

It has been estimated that most bacterial infections in human are correlated with biofilm and about 50% of the healthcare associated infections are indwelling devices-associated. Biofilm growing bacteria and chronic infections they cause constitute a great public health concern.

Biofilm is defined as a structured consortium associated with a living or inert abiotic surface formed by microbial cells embedded in a self-produced polymer matrix principally of polysaccharide material. Microbial biofilms are ubiquitous in nature and can be formed on a wide variety of surfaces including living tissues, indwelling medical devices, water system piping, or natural aquatic systems.

The importance of biofilm is therefore well recognized in medical, environmental, and industrial contexts. Such microbial aggregates constitute potential reservoirs for pathogens, which serve as a continuous source of infections and cross contaminations. In highly bacteria-sensitive industries (such as for instance food industry) are used materials which include plastics, rubber, glass, cement and stainless steel. The degree of biofilm formation on different materials for Legionella pneumophila has been ranked by Rogers et al. (Rogers, J., Dowsett, A.B., Dennis, P.J., Lee, J.V. and Keevil, C.W. (1994)). Influence of temperature and plumbing material selection on biofilm formation and growth of Legionella pneumophila in a model portable water system containing complex microbial flora. (Appl Environ Microbiol 60, 1585-1592) and by Meyer (Meyer, B. (2001) Approaches to prevention, removal and killing of biofilms. In 2nd International Symposium on Disinfection and Hygiene: Future Prospects, pp. 249-253. Wageningen, the Netherlands: Elsevier Sci Ltd.) with the capacity to support biofilm growth increasing from glass, stainless steel, polypropylene, chlorinated PVC, unplasticized PVC, mild steel, polyethylene, ethylene-propylene to latex. Many industries have need for antibacterial modification of plastic and latex surfaces since as produced plastic promote bacterial proliferation.

The vast majority of the medical devices may result in biofilm infections, with central line- associated bloodstream infections, catheter-associated urinary tract infections, and ventilator- associated pneumonia being the most significant. Furthermore, biofilm-associated organisms are fundamentally different from populations of suspended (planktonic) cells. Bacteria in biofilm exhibit significantly reduced susceptibility to antibiotics, disinfectants, as well as to innate and adaptive host immune mechanisms. Therefore, once a bacterial biofilm infection is established, it becomes difficult to eradicate.

Silver has been used for centuries as a biocide agent. When contacted by moisture an electrochemical reaction releases silver ions. These ions penetrate microbes rendering them unable to function, grow, or reproduce. As a solution for bacterial biofilm infections, silver-based biocides have found applications in materials such as Polyvinyl Chloride (PVC), Polyurethane (PU), Polyethylene (PE) and Wood Plastic Composites (WPC) and in low VOC (volatile organic compound) water-based paints and coatings which were used to prevent microbial growth. A rise in cases of acquired infections including methicillin-resistant Staphylococcus aureus (MRSA), concern over conditions like the 'sick building syndrome' and the already high longing for microbe-resistant products is certainly expected to up the ante for silver-based biocides in plastics. The most demanding sectors for silver-based biocide market include food processing plants, pharmaceutical production plants and medical institutions such as hospitals and care homes, as they are offering an ideal environment for microbes.

However, several problems occur when silver nanoparticles are used:
1. silver nanoparticles demonstrate uncontrolled antibacterial effect all the time
2. silver nanoparticles are prone to oxidation so after certain time they don't show antibacterial effects
3. silver nanoparticles are water soluble; any exposure of nanocomposite surface with silver nanoparticles to water or biological fluids (urine, blood, sweat) results in surface degradation
4. silver is an expensive material

Another solution to problem with bacterial biofilm infection offer antimicrobial surfaces that are designed to either repel the microbes or kill them in contact. Repelling surfaces make it very hard for bacteria to attach and are generally prepared by modifying the surface with either neutral polymers like poly(ethyleneglycol), which prevents bacterial adhesion by steric hindrance, or charged, anionic polymers, which repel negatively charged cell membrane. Contact killing surfaces could be designed by modification of surface with cationic polymers, which strongly interact with the cell membrane and cause its disruption.

Another way to produce contact killing surface is to embed photoactive substances into polymer substrate. Photoactive substance kill bacteria either by increase of surface temperature above 42°C or by surface emission of reactive oxygen species. In this way Noimark et al. (Noimark S, Allan E, Parkin IP. Light-activated antimicrobial surfaces with enhanced efficacy induced by a dark-activated mechanism, Chem. Sci. 2014; 5: 2216-2223.) produced first light activated microbial surface with efficacy that surpasses range of other biocidal polymers. Novel bactericidal surfaces were prepared by incorporating crystal violet, methylene blue and 2 nm gold nanoparticles into medical grade silicone using a simple dipping technique. Disclosure by Noimark et al. is based on two materials (crystal violet, methylene blue) that are prone to photobleaching i.e. they change their chemical structure upon short term illumination. As consequence, these materials lose their antibacterial properties in short period of illumination.

Large numbers of inorganic nanoparticles primarily based on silver, titanium or zinc and organic compounds such as N-butyl-1, 2-benzisothiazolin-3-one, zinc 2-pyridine-thiol-1-oxide and similar were used as biocides, encapsulated in a various polymer systems (polycaprolactone/ethylene vinyl acetate copolymer, butyl benzyl phthalate, diisodecyl phthalate, di(heptyl, nonyl, undecyl) phthalate). Silver and titanium are rather expensive materials. Zinc based antibacterial compounds are soluble in water and prone to degradation.

Recently, a class of carbon nanoparticles superior to conventional semiconductor quantum dots (in terms of chemical inertness and biocompatibility) have been synthesized and named carbon quantum dots (CQD). Their favorable characteristics include size- and wavelength- dependent luminescence, resistance to photobleaching and ease of production and bioconjugation. Like their carbon relative fullerene, CQD is efficient singlet oxygen generator. Singlet oxygen is toxic oxygen form produced by CQD under irradiation from common LED diode with wavelength between 420- 470nm. Singlet oxygen is highly potent molecule that disrupts bacterial membrane within short time of exposure. For these reasons, CQD are presently at the center of research efforts to develop low- toxicity, environmentally friendly biocides.

Carbon quantum dots (CQDs) are the newest 0D carbon based fluorescent nanomaterials with diameter less than 100 nm. In these nanomaterials, the contained carbon atoms are sp²- hybridized indicating that their inner core is characterized by π-conjugated systems. Their most important characteristic is their semiconducting character, represented by a tunable energy band gap, usually less than 1.5 eV. Additionally, they have very strong photoluminescence in the visible part of the spectrum and a high resistance to photobleaching.

The synthesis of CQDs can be achieved in two radically different approaches: bottom-up condensation reactions and top-down cutting of graphene-based materials. Regarding the bottom-up approach, CQDs are synthesized from small carbon precursors such as citric acid, L glutamic acid, adenosine triphosphate or polycyclic aromatic hydrocarbons. Top-down synthesis is based on oxidative cutting of graphene materials: hydrothermal or electrochemical cutting of graphene, carbon nanotubes, and fullerenes. Special subclass of carbon quantum dots is formed by electrochemical cutting of graphene. This type of dots are called Graphene Quantum Dots (GQD). Structure of GQD is more ordered than structure of CQD that results with slightly different properties.

One of CQDs' main characteristics is high solubility in water, which, together with low toxicity and biocompatibility, presents them as an attractive material for biological applications: currently they are used in in-vitro and in-vivo cell imaging, in targeted drug delivery, and in photodynamic therapy.

Photodynamic therapy (PDT) is a noninvasive treatment for selective cancer cell destruction and in antimicrobial therapy. This approach demands the colocalization of oxygen molecules, light, and photosensitizers (PS), which will convert oxygen into reactive singlet oxygen and cause photocytotoxi city.

The recent study showed that upon blue light illumination, water based solution of GQDs generate reactive oxygen and kill human glioma cells or bacteria (1. Z. Markovic, B. Ristic, K. Arsikin, D. Klisic, Lj . Harhaji-Trajkovic, B. Todorovic-Markovic, D. Kepic, T. Kravic-Stevovic, S. Jovanovic, M. Milenkovic, D. Milivojevic, V. Bumbasirevic, M. Dramicanin, V. Trajkovic, Graphene quantum dots as autophagy-inducing photodynamic agents, Biomaterials, 2012; v33; pp 7084-7092; 2. B. Z. Ristic, M. M. Milenkovic, I. R. Dakic, B. M. Todorovic-Markovic, M. S. Milosavljevic, M. D. Budimir, V. G. Paunovic, M. D. Dramicanin, Z. M. Markovic, V. S. Trajkovic, Photodynamic antibacterial effect of graphene quantum dots Biomaterials, 2014; v35; pp 4428-4435).

In the study published in 2014 we reported that electrochemically produced graphene quantum dots (GQD), generate reactive oxygen species when photoexcited (470 nm, 1 W), and kill two strains of pathogenic bacteria, methicillin-resistant Staphylococcus aureus and Escherichia coli. Bacterial killing was demonstrated by the reduction in number of bacterial colonies in a standard plate count method, the increase in propidium iodide uptake confirming the cell membrane damage, as well as by morphological defects visualized by atomic force microscopy. The induction of oxidative stress in bacteria exposed to photoexcited GQD was confirmed by staining with a redoxsensitive fluorochrome dihydrorhodamine 123. Neither GQD nor light exposure alone were able to cause oxidative stress and reduce the viability of bacteria. Importantly, mouse spleen cells were markedly less sensitive in the same experimental conditions, thus indicating a fairly selective antibacterial photodynamic action of GQD.

Disclosures published in Biomaterials are based on carbon quantum dots soluble in water. Such material is not suitable for making compound with polymers soluble in organic solvents immiscible with water.

Main unsolved problems for currently available methods are that they use fillers which are expensive and the fillers are cytotoxic; there is also need for materials which will have controlled antibacterial activity in order to prevent development of bacteria resistance, and need for material which will be able to protect against superbacteria.

### Summary of the invention

For production of polymer nanocomposite filled with CQD we have to resolve several issues such as solubility in organic solvents. Polymers used for most of biomedical, food and pharmaceutical applications are not soluble in water. They are commonly soluble only in limited class of organic solvents such as chloroform or toluene. In order to overcome that problem we have developed new method for the production of hydrophobic CQD (hCQD) soluble in chloroform and toluene.

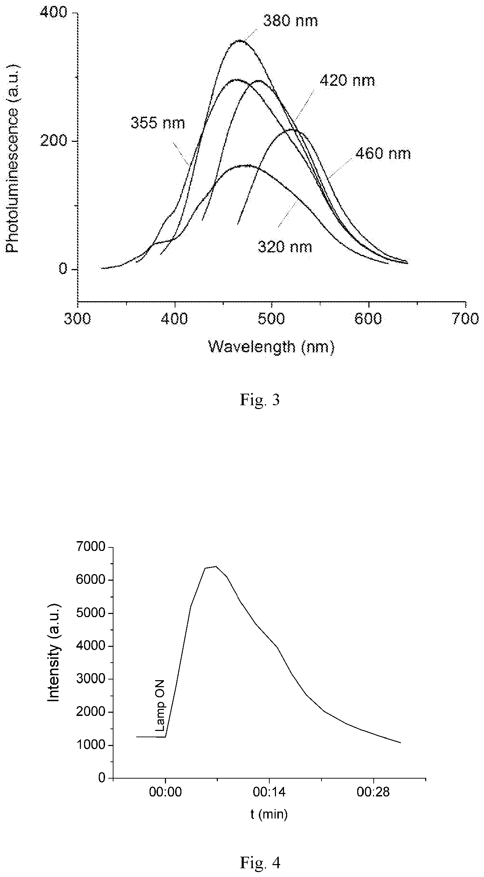

Size of hCQD is between 5 and 15 nm. hCQD are photoluminescent material i.e. when irradiated with certain excitation source they re-emit light usually in visible region of spectrum (Figure 3). This feature enables easy identification of their presence in the polymer composite, either in top layer of the composite (film) or in the interior of the composite.

We have demonstrated that hCQD produce singlet oxygen molecule by electron paramagnetic resonance (Figure 4). hCQD have shown steady production of singlet oxygen under blue lamp irradiation. After 7 minutes, spin trap was exhausted and EPR show decrease of singlet oxygen production. After addition of a new amount of fresh spin trap, EPR shows identical production of singlet oxygen.

Nanocomposite can be produced based on styrene-isoprene-styrene copolymer (Kraton) and hydrophobic CQD by any of following methods: layer by layer (LbL) method, solution mixing methods and by electrospinning:
- Layer by layer method is based on deposition of hCQD layer by drop casting followed by deposition of styrene-isoprene-styrene tri-block copolymer (Kraton) layer on top of it. Alternative method is Langmuir Blodget deposition of hCQD on top of polymer film. We have produced very homogenous layer of hCQD with average thickness of monolayer hCQD film 3.6 nm.
- Solution mixing is based on mixing of polymer and hCQD solutions in toluene. Drying of mixed solvent in PTFE (polytetrafluorethylene - Teflon) mold resulted with milimeter thick composite. hCQD aggregated inside polymer.
- Electrospinning is a fiber production method which uses electric force to draw charged threads of polymer solutions up to fiber diameters in the order of some ten nanometers. Our fibers had diameter in range from 200nm to 1 micrometer.

Method for manufacture of a hybrid nanocomposite material with antibacterial properties comprises the mixing of polymer and filler together, while the amount of the filler in the mixture is max 10% wt., structural blocks of the polymer are selected from polyamide, acrylics, butadiene, dialkylphtalate, dimethyl siloxanes, isoprene, isobutylene, styrene structural units and the filler is hydrophobic carbon quantum dots (hCQD) prepared by bottom-up condensation reaction of polyoxyethylene-polyoxypropylene-polyoxyethylene which cover:
- polyoxyethylene-polyoxypropylene-polyoxy ethylene in the amount between 2 and 10 mass % is dissolved in water
- mixing the obtained solution with concentrated phosphoric acid in the amount of up to two times higher than the amount of water used for dissolving polyoxyethylene-polyoxypropylene-polyoxyethylene
- processing the compound at 240 -260 degrees Celsius for 90-240 minutes
- cooling the compound to the room temperature
- mixing with toluene or other organic water-immiscible solvents in the amount of up to three times higher than the amount of water used for dissolving polyoxyethylene-polyoxypropylene-polyoxyethylene
- decantation from water
- and filtration of hCQD dissolved in toluene or chlorophorm.

Carbon quantum dots (hCQD) can be either deposited as film on the surface of the polymer or incorporated into the polymer. Homogenous mixture of hCQD and polymer is dissolved in toluene or other organic water-immiscible solvents.

The hybrid nanocomposite material can be produced by layer by layer method or by electrospinning or melt mixing.

Hybrid nanocomposite material exhibits antibacterial activity after its illumination with blue light in the visible region having a wavelength of 420 - 470 nm.

The thickness of the film of carbon quantum dots is 3 - 100 nm.

Hybrid nanocomposite material can be produced as transparent material.

Hybrid nanocomposite material can be used to cause an oxidative stress and reduce viability of bacteria, while the controlled antibacterial activity is activated after its illumination with blue light in the visible region having a wavelength of 420-470nm.

Hybrid nanocomposite material with antibacterial properties can be used for medical applications, food and pharmaceutical industry applications.

Production method as described in general consists of 2 phases:
1. Production of hydrophobic carbon quantum dots soluble in chloroform or toluene hCQD are produced by pyrolysis of polyoxyethylene-polyoxypropylene-polyoxyethylene copolymer dissolved in phosphoric acid. When product is cooled down, hCQD are transferred from water to organic phase.
2. Production of polymer composite doped with hCQD

### Another method of composite based on hCQD:

hCQD are mixed with polymer by Melt Mixing. For the preparation of the composites, the mixture of polymer and appropriate amount of hCQD were mixed in a hot melt compounder at temperature over melting point of selected polymer at a mixing speed of at least 30 rpm for 10 min. The extruded strands were cut for pressing into the form of sheets using a hydraulic press (Fontijne SRA-100, The Netherlands) at the same temperature as hot melt mixing was done at pressure of 10 bars for 3 minutes.

Three different types of composites were produced:
1. Film of hCQD over polymer foil
2. Thick polymer foil doped with hCQD and
3. Polymer nanofibers doped with hCQD.

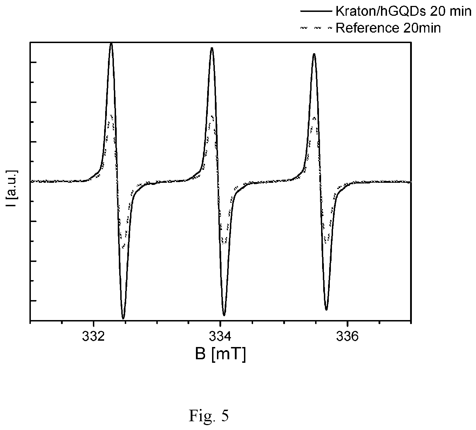

We have demostrated that nanocomposite styrene-isoprene-styrene tri-block copolymer (Kraton) /hCQD produced by LbL method produces more singlet oxygen molecules than composites produced by other methods (Figure 5).

Photodynamic antibacterial tests demonstrated that nanocomposite styrene-isoprene-styrene tri-block copolymer (Kraton) /CQD produced by LbL method is a very potent antibacterial material.

Advantage in usage of carbon quantum dots as antibacterial agents is based on:
1. Toxicity is triggered by blue light in region 420-470nm. In the absence of light there is no toxicity towards bacteria.
2. hCQD are soluble in organic solvents commonly used for polymer dissolution.
3. hCQD are not soluble in water. Biological fluids can't dissolve hCQD and degrade antibacterial function of the composite.
4. hCQD are stable materials in a long term period. They don't easily form chemical compounds with atmospheric gases or molecules present in biological fluids.
5. hCQD are cheaper material than nanoparticles of silver or titanium.

Novelty of this approach is based on controlled antibacterial action, and on nondegradable properties of the composite. For example, such a composite can be successfully used for flooring and wallcovering in hospitals where antibacterial action can be controlled by number of turned blue diodes present in LED lightning on ceilings during working hours.

### Description of figures

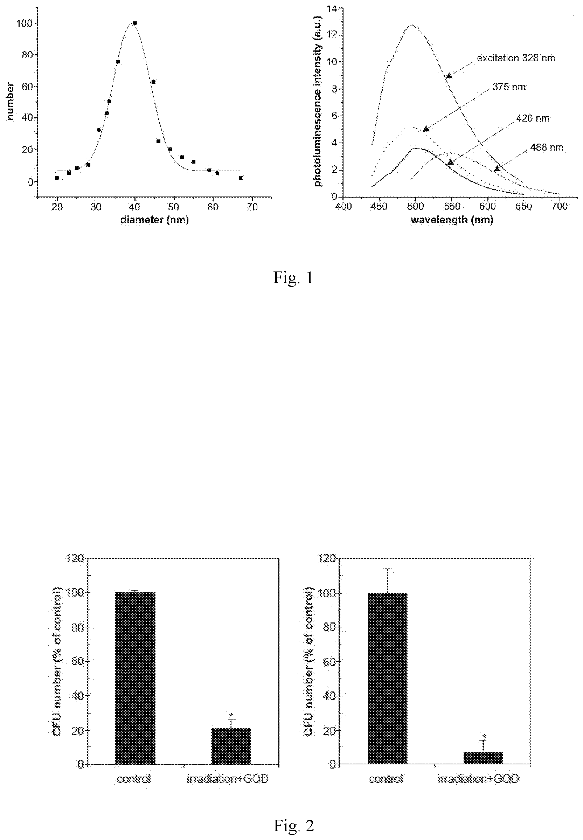

Fig. 1 Characterization of GQD: (A) Size distribution of GQD nanoparticles calculated by AFM software; (B) Photoluminescence spectra of GQD exposed to different excitation wavelengths.
Fig.2 Photoexcited GQD reduce the number of bacterial colonies: (A) E. coli and (B) S. aureus suspensions were incubated with PBS (control) or exposed simultaneously to GQD (200 mg/ml) and bluelight (470nm, 1 W) for 15min. The number of CFU was determined by standard plate count method.
Fig 3. Photoluminescence of hCQD dissolved in chloroform at various excitation wavelengths in range from 320nm (UV light) to 480nm (dark blue light).
Fig 4. Long term production of singlet oxygen of hCQD in chloroform measured by EPR under irradiation.
Fig 5. Production of singlet oxygen measured by EPR spectroscopy. Signal from styrene-isoprene-styrene tri-block copolymer (Kraton)/hGQD LbL film has intensity 2.5 times larger than reference sample of spin trap.

### Detailed description of the invention

Method for manufacture of a hybrid nanocomposite material with antibacterial properties comprises polymer and filler mixing together, while the amount of the filler in the mixture is max 10% wt, structural blocks of the polymer are selected from polyamide, acrylics, butadiene, dialkylphtalate, dimethyl siloxanes, isoprene, isobutylene, styrene structural units and filler is hydrophobic carbon quantum dots (hCQD) prepared by bottom-up condensation reaction of polyoxyethylene-polyoxypropylene-polyoxy ethylene covering:
- polyoxyethylene-polyoxypropylene-polyoxyethylene dissolved in water of the amount between 2 and 10 mass % is
- mixing the obtained solution with concentrated phosphoric acid in the amount of up to two times higher than the amount of water used for dissolving polyoxyethylene-polyoxypropylene- polyoxyethylene. Concentrated phosphoric acid is 85% water solution of phosphoric acid,
- processing the compound at 240-260 degrees Celsius for 90-240 minutes,
- cooling the compound to the room temperature,
- mixing with toluene or chlorophorm in the amount of up to three times higher than the amount of water used for dissolving polyoxyethylene-polyoxypropylene-polyoxyethylene,
- decantation from water,
- and filtration of hCQD dissolved in toluene or chloroform through 200 nm pore size PTFE filter.

We have demonstrated possibility of production of nanocomposite based on styrene-isoprene-styrene tri-block copolymer (Kraton) and hydrophobic CQD by layer by layer (LbL), solution mixing methods and by electrospinning.

Layer by layer method is based on deposition of hCQD layer by drop casting followed by deposition of styrene-isoprene- styrene tri-block copolymer (Kraton) layer on top of it. Alternative method is Langmuir Blodget deposition. hCQD layer prepared by LbL is very homogenous.

Solution mixing method is based on mixing of polymer and hCQD solutions in toluene. Drying of mixed solvent in PTFE (polytetrafluoroethylene - Teflon) mold resulted with millimeter thick composite. hCQD are not homogenously distributed in composite.

Electrospinning is a fiber production method which uses electric force to draw charged threads of polymer solutions up to fiber diameters in the order of some ten nanometers. Our fibers had diameter of 200nm - 1 µm.

Nanocomposite styrene-isoprene-styrene tri-block copolymer (Kraton) / hCQD produced by LbL method produces more singlet oxygen molecules than composites produced by other methods.

Photodynamic antibacterial tests demonstrated that nanocomposite styrene-isoprene-styrene tri-block copolymer (Kraton) / hCQD produced by LbL method is a very potent antibacterial material.

Nanocomposite styrene-isoprene-styrene tri-block copolymer (Kraton) / hCQD solves the following problems:
1. Antibacterial action of nanocomposite is turned on when blue light of wavelength 420 - 470 nm irradiate sample. In the absence of blue light there isn't any toxicity to bacteria.
2. hCQD have no problem with oxidation or degradation. They are stable materials in a long time period.
3. hCQD soluble in organic solvents compatible to common polymers are produced, with capability to produce reactive oxygen species. They are insoluble in water or biological fluids.

### Example 1

Synthesis hCQD: In a typical synthesis of hydrophobic carbon dots (hCQDs), 1 g of polyoxyethylene-polyoxypropylene-polyoxyethylene (Pluronic 68) was allowed to dissolve in 100 ml of water for about 15 minutes. Then 200 ml of phosphoric acid was added and the mixture was stirred for producing a homogeneous reaction mixture. The reaction mixture was then heated on magnetic stirrer at 240 degrees for about 240 minutes. During this time period a brown colored product was obtained. The reaction mixture was allowed to cool down at room temperature and then to it 250 ml of water was added to obtain a brownish black colored precipitate. On top of it 300 ml of toluene or chloroform is poured. Water and organic phases are mixed on stirrer until toluene or chloroform obtained yellow color. Organic phase was decanted and filtered.

Nanoparticle layers were deposited by a modified Langmuir-Blodgett (LB) technique using a computer-controlled Langmuir-Blodgett (LB) trough (Nima Technology). In this method styrene-isoprene-styrene tri-block copolymer (Kraton) foil substrate was placed horizontally inside the trough before the particles were distributed onto the water subphase. The hCQD nanoparticles dissolved in chloroform were spread by a microsyringe onto air/water interface of a LB trough. Following equilibration at 18°C for 30 min to allow the chloroform to evaporate, the nanoparticle layer was compressed to a monolayer phase. The surface pressure of nanoparticle arrays was monitored by a Wilhelmy plate. The ordered monolayer was transferred on the substrate by a regulated removal of the subphase at a surface pressure of 20 mN/m.

The nanoparticle multilayers were prepared using the method described above, adding layer by layer one after another. Resultant thickness of hCQD multilayer film was in range from 3 to 100 nm.

The size, shape and local ordering of the arrays were studied by a transmission electron microscope (HR TEM) and atomic force microscopy (AFM Bruker Nanoscope). The emission spectra were recorded on a RF-5301PC (Shimadzu, Japan) spectrofluorophotometer. The excitation wavelength was set in range from 320 to 480 nm. The fluorescence of the solutions were measured in 1 x 1 cm quartz cuvettes in the right angle arrangement or in a triangular cuvette in the case of a high probe concentration to partially suppress self-absorption. The homogeneity of the deposited LB layers over the large areas was verified by the confocal fluorescence microscopy technique (Witec) using a scanning mode.

EPR Spectroscopy was used to monitor the generation of singlet oxygen in the organic solutions and on surfaces. The EPR experiments were performed at room temperature using a Magnetech spectrometer operating at a nominal frequency of 9.5 GHz. A mixture containing 0.18 ml TMP (tetramethylpiperidine) and hCQD colloids in chloroform and toluene with a concentration of 1 mg L⁻¹ was thoroughly ultrasonicated, incubated and irradiated with blue light at 470nm at room temperature for 24 h. Aliquots (30 µL) of the TMP-hCQD mixtures were then transferred into 3 mm i.d. quartz tubes and the TEMPOL signal was analyzed by EPR. Quantification of the signals was realized by calculating the mean value of the amplitudes of the EPR signals and the data are expressed in arbitrary units. Similar procedure was applied to determine singlet oxygen generation on surface of nanocomposite.

A modified microtiter-plate test was used for quantifying biofilm formation by the representative gram-positive (S. aurues) and gram-negative bacteria (E. coli) in the polymeric nanocomposites doped with hCQD under illumination. This technique involves fixing the bacterial film with methanol, staining with crystal violet, and, after the bound dye is released with ethanol, measuring the optical density of the solution by using a colorimetric reader.

### Example 2

Synthesis of hydrophobic carbon dots (hCQDs): 1 g of polyoxyethylene-polyoxypropylene- polyoxyethylene (Pluronic 68) was allowed to dissolve in 100 ml of water for about 15 minutes. Then 200 ml of phosphoric acid was added and the mixture was stirred for producing a homogeneous reaction mixture. The reaction mixture was then heated on magnetic stirrer at 250 degrees for about 120 minutes. During this time period a brown colored product was obtained. The reaction mixture was allowed to cool down at room temperature and then to it 250 ml of water was added to obtain a brownish black colored precipitate. On top of it 300 ml of toluene is poured. Water and organic phases are mixed on stirrer until toluene obtained yellow color. Organic phase was decanted and filtered.

For the preparation of the composites, 5wt% of hCQD are dispersed in 5 ml toluene. Subsequently, 5ml of 10% of styrene-isoprene-styrene tri-block copolymer (Kraton) solution in the toluene and 5ml of hCQD are vigorously stirred for about 2 h and then poured in recipients with the desired shape to obtain monolithic composites over night.

The size and shape of hCQD were studied by a transmission electron microscope (HR TEM) and atomic force microscopy (AFM Bruker Nanoscope). The emission spectra were recorded on a RF-5301PC (Shimadzu, Japan) spectrofluorophotometer. The excitation wavelength was set in range from 320 to 480 nm. The fluorescence of the solutions were measured in 1 x 1 cm quartz cuvettes in the right angle arrangement or in a triangular cuvette in the case of a high probe concentration to partially suppress self-absorption. The homogeneity of the composite over the large areas was verified by the confocal fluorescence microscopy technique (Witec) using a scanning mode.

EPR Spectroscopy was used to monitor the generation of singlet oxygen in the organic solutions and on surfaces. The EPR experiments were performed at room temperature using a Magnetech spectrometer operating at a nominal frequency of 9.5 GHz. A mixture containing 0.18 ml TMP (tetramethylpiperidine) and hCQD colloids in toluene with a concentration of 1 mg L⁻¹ was thoroughly ultrasonicated, incubated and irradiated with blue light at 470 nm at room temperature for 24 h. Aliquots (30 µL) of the TMP-hCQD mixtures were then transferred into 3 mm i.d. quartz tubes and the TEMPOL signal was analyzed by EPR. Quantification of the signals was realized by calculating the mean value of the amplitudes of the EPR signals and the data are expressed in arbitrary units.

Similar procedure was applied to determine singlet oxygen generation on surface of nanocomposite.

### Example 3

In a typical synthesis of hydrophobic carbon dots (hCQDs), 1 g of polyoxyethylene-polyoxypropylene-polyoxyethylene (Pluronic 68) was allowed to dissolve in 100 ml of water for about 15 minutes. Then 200 ml of phosphoric acid was added and the mixture was stirred for producing a homogeneous reaction mixture. The reaction mixture was then heated on magnetic stirrer at 260 degrees for about 90 minutes. During this time period a brown colored product was obtained. The reaction mixture was allowed to cool down at room temperature and then to it 250 ml of water was added to obtain a brownish black colored precipitate. On top of it 300 ml of chloroform is poured. Water and organic phases are mixed on stirrer until chloroform obtained yellow color. Organic phase was decanted and filtered.

In a typical experimental procedure, transparent polyamide/hCQDs composite were prepared with five steps: (1) Preparation of polyamide solutions (n-propanol, 18wt% of polyamide); (2) Dilution of the colloidal solution of hCQDs to desire volume in chlorform; (3) Preparation of electrospinning precursor solution using 8g polyamide solutions with 5wt% hCQDs colloidal solution; (5) Fabrication of composite transparent polyamide/hCQDs nanofibers by electrospinning at room temperature with 25% relative humidity. The applied voltage was 9 kV and the distance between the needle tip and the collector was 15 cm. The feeding rate of the solution was 1 ml/h. Finally, the composite nanofibers were dried at room temperature in vacuum.

The size and shape of hCQD were studied by a transmission electron microscope (FIR TEM) and atomic force microscopy (AFM Bruker Nanoscope). The size and shape of composite nanofibers were studied by a scanning electron microscope (Dual Beam (FIB/SEM) Microscope Quanta 3D 200i (FEI)). The emission spectra were recorded on a RF-5301PC (Shimadzu, Japan) spectrofluorophotometer. The excitation wavelength was set in range from 320 to 480 nm. The fluorescence of the solutions were measured in 1 x 1 cm quartz cuvettes in the right angle arrangement or in a triangular cuvette in the case of a high probe concentration to partially suppress self-absorption. The homogeneity of the composite over the large areas was verified by the confocal fluorescence microscopy technique (Witec) using a scanning mode.

EPR Spectroscopy was used to monitor the generation of singlet oxygen in the organic solutions and on surfaces. The EPR experiments were performed at room temperature using a Magnetech spectrometer operating at a nominal frequency of 9.5 GHz. A mixture containing 0.18 ml TMP (tetramethylpiperidine) and hCQD colloids in chloroform with a concentration of 1 mg L⁻¹ was thoroughly ultrasonicated, incubated and irradiated with blue light at 470nm at room temperature for 24 h. Aliquots (30 µL) of the TMP-hCQD mixtures were then transferred into 3 mm i.d. quartz tubes and the TEMPOL signal was analyzed by EPR. Quantification of the signals was realized by calculating the mean value of the amplitudes of the EPR signals and the data are expressed in arbitrary units.

Similar procedure was applied to determine singlet oxygen generation on surface of nanocomposite.

### Example 4

Three grams of granules - mixture of paraffin with polyisobuthylene (Paraplast) was allowed to melt at 70 °C using temperature controlled hot plate. This melt was rapidly injected in nitrogen flushed hot solution of toluene followed by a gentle agitation for 3 h. To enhance the passivation as well as fluorescence properties of hCQD, 0.4 ml of dodecanethiol was added during the onset of stirring. The solution turned to yellowish green after completion of the reaction. This solution was ultra-filtered using 0.2 µm filter.

For the preparation of the composites, the mixture of polymer (styrene-isoprene-styrene tri-block copolymer (Kraton)) and 10wt% of hCQD were mixed in a hot melt compounder (with a 15 ml chamber of micro-compounder DSM Xplore, The Netherlands or 30/50 ml chamber of mixer or extruder Brabender GmbH & Co. KG) at temperature over melting point of selected polymer at a mixing speed of at least 30 rpm for 10 min. The extruded strands were cut for pressing into the form of sheets using a hydraulic press (Fontijne SRA-100, The Netherlands) at the same temperature as hot melt mixing was done at pressure of 10 bars for 3 minutes.

The size and shape of hCQD were studied by a transmission electron microscope (HR TEM) and atomic force microscopy (AFM Bruker Nanoscope). The emission spectra were recorded on a RF-5301PC (Shimadzu, Japan) spectrofluorophotometer. The excitation wavelength was set in range from 320 to 480 nm. The fluorescence of the solutions were measured in 1 x 1 cm quartz cuvettes in the right angle arrangement or in a triangular cuvette in the case of a high probe concentration to partially suppress self-absorption. The homogeneity of the composite over the large areas was verified by the confocal fluorescence microscopy technique (Witec) using a scanning mode.

EPR Spectroscopy was used to monitor the generation of singlet oxygen in the organic solutions and on surfaces. The EPR experiments were performed at room temperature using a Magnetech spectrometer operating at a nominal frequency of 9.5 GHz. A mixture containing 0.18 ml TMP (tetramethylpiperidine) and hCQD colloids in toluene with a concentration of 1 mg L⁻¹ was thoroughly ultrasonicated, incubated and irradiated with blue light at 470nm at room temperature for 24 h. Aliquots (30 µL) of the TMP-hCQD mixtures were then transferred into 3 mm i.d. quartz tubes and the TEMPOL signal was analyzed by EPR. Quantification of the signals was realized by calculating the mean value of the amplitudes of the EPR signals and the data are expressed in arbitrary units.

Similar procedure was applied to determine singlet oxygen generation on surface of nanocomposite prepared by hot melt mixing.

### Industrial applicability

Hybrid nanomaterial with antibacterial properties can be used for flooring, roofing, coated fabrics, wallcovering, windowcovering, flexible films for food package, foils and sheet for antibacterial catheters, fibers for antibacterial suture on body surface and other applications where antibacterial activity is needed, mainly in medical applications and in industries such as food production, pharmaceutical production.

## Claims

1. A method for manufacture of a nanocomposite material with antibacterial properties using carbon quantum dots CQD, characterized that, comprising mixing of a polymer and a filler together, while the amount of the filler in the mixture is max 10% wt, and the polymer is selected from polyamide, acrylics, butadiene, dialkylphtalate, dimethylsiloxanes, isoprene, isobutylene, styrene structural units, the filler is hydrophobic carbon quantum dots hCQD which are prepared by bottom-up condensation reaction of polyoxyethylene-polyoxypropylene-polyoxyethylene in which:
- polyoxyethylene-polyoxypropylene-polyoxyethylene in the amount between 2 and 10 mass % is dissolved in water,
- mixing the obtained solution with concentrated phosphoric acid in the amount of up to two times higher than the amount of water used for dissolving polyoxyethylene-polyoxypropylene-polyoxyethylene,
- processing the compound at 240 - 260°C for 90 - 240 minutes,
- cooling the compound to room temperature,
- mixing the compound with toluene or chlorophorm in the amount of up to three times higher than the amount of water used for dissolving polyoxyethylene-polyoxypropylene-polyoxyethylene,
- decantating the compound from water,
- and filtrating the compound of hydrophobic carbon quantum dots hCQD dissolved in toluene or chlorophorm.

2. The method for manufacture of a nanocomposite material with antibacterial properties according to claim 1, wherein carbon quantum dots hCQD are deposited as film on the surface of the polymer in the form of film.

3. The method for manufacture of a nanocomposite material with antibacterial properties according to claim 1, wherein carbon quantum dots hCQD are incorporated into the polymer.

4. The method for manufacture of a nanocomposite material with antibacterial properties according to one of the preceding claims, wherein styrene-isoprene-styrene tri-block copolymer substrate is placed inside the Langmuir-Blodgett, referred to hereinafter as LB, trough, subsequently nanoparticles of hydrophobic carbon quantum dots are dissolved in chloroform were spread by a microsyringe onto air/water interface of a LB trough and after the evaporation of chloroform the nanoparticle layer is compressed to a monolayer phase and the ordered monolayer is transferred on the substrate by a regulated removal of the subphase when the nanoparticle multilayers are prepared using the method described above, adding layer by layer one after another.

5. The method for manufacture of a nanocomposite material with antibacterial properties according to one of the preceding claims, wherein 5 wt% toluene solution of hydrophobic carbon quantum dots hCQD are mixed with 10 wt% of styrene-isoprene-styrene tri-block copolymer, referred to hereinafter as Kraton, solution in the toluene and poured in mould with the desired shape to obtain monolithic composites .

6. The method for manufacture of a nanocomposite material with antibacterial properties according to one of the preceding claims, wherein polymer and hydrophobic carbon quantum dots hCQD are mixed in a hot melt compounder at temperature over melting point of selected polymer at a mixing speed of at least 30 rpm for 10 min., subsequently the extruded strands are cut for pressing into the form of sheets using a hydraulic press at the same temperature as hot melt mixing was done at pressure of 1 MPa for 3 minutes.

7. The method for manufacture of a nanocomposite material with antibacterial properties according to one of the preceding claims, wherein polyamide solutions in n-propanol with concentration of 18 wt% is prepared, subsequently is diluted of the colloidal solution of hydrophobic carbon quantum dots hCQDs in chloroform, then electrospinning precursor solution is prepared using 8g polyamide solutions with hCQDs colloidal solution and then transparent composite polyamide/hCQDs nanofibers are produced by electrospinning at room temperature with 25% relative humidity and followed by drying at room temperature in vacuum.

8. A nanocomposite material with antibacterial properties manufactured according to one of the preceding claims, **characterized in that** the thickness of the film of carbon quantum dots is 3 - 100 nm.

9. A nanocomposite material with antibacterial properties manufactured according to one of the claims 1-5, **characterized in that** the material exhibits antibacterial activity after its illumination with blue light in the visible region having a wavelength of 420 - 470 nm.

10. The nanocomposite material with antibacterial properties according to claim 8 or 9, **characterized in that** the material is transparent.

11. The nanocomposite material with antibacterial properties according to one of claims 8 -10 used for medical applications, food industry and pharmaceutical industry applications.

## Patentansprüche

1. Verfahren zur Herstellung eines Nanoverbundmaterials mit antibakteriellen Eigenschaften unter Verwendung von Kohlenstoff-Quantenpunkten CQD, **dadurch gekennzeichnet, dass** es ein Vermischen eines Polymers und eines Füllstoffs miteinander umfasst, wobei die Menge des Füllstoffs in der Mischung maximal 10 Gew.-% beträgt und das Polymer aus Polyamid, Acrylate, Butadien, Dialkylphthalat, Dimethylsiloxane, Isopren, Isobutylen, Styrol Struktureinheiten ausgewählt ist, der Füllstoff hydrophobe Kohlenstoff-Quantenpunkte hCQD ist, die durch Bottom-Up-Kondensationsreaktion von Polyoxyethylen-Polyoxypropylen-Polyoxyethylen hergestellt werden, wobei:
- Polyoxyethylen-Polyoxypropylen-Polyoxyethylen in einer Menge zwischen 2 und 10 Masse-% in Wasser gelöst wird,
- die erhaltene Lösung mit konzentrierter Phosphorsäure in einer Menge vermischt wird, die bis zu zweimal höher ist als die zum Lösen von Polyoxyethylen-Polyoxypropylen-Polyoxyethylen verwendete Wassermenge,
- die Verbindung bei 240 - 260°C für 90 - 240 Minuten verarbeitet wird,
- die Verbindung auf Raumtemperatur abgekühlt wird,
- die Verbindung mit Toluol oder Chlorophorm in einer Menge vermischt wird, die bis zu dreimal höher ist als die zum Lösen von Polyoxyethylen-Polyoxypropylen-Polyoxyethylen verwendete Wassermenge,
- die Verbindung aus Wasser dekantiert wird,
- und die Verbindung aus hydrophoben Kohlenstoff-Quantenpunkten hCQD, die in Toluol oder Chlorophorm gelöst ist, gefiltert wird.

2. Verfahren zur Herstellung eines Nanoverbundmaterials mit antibakteriellen Eigenschaften nach Anspruch 1, wobei Kohlenstoff-Quantenpunkte hCQD als Film auf der Oberfläche des Polymers in Form eines Films abgeschieden werden.

3. Verfahren zur Herstellung eines Nanoverbundmaterials mit antibakteriellen Eigenschaften nach Anspruch 1, wobei Kohlenstoff-Quantenpunkte hCQD in das Polymer eingearbeitet werden.

4. Verfahren zur Herstellung eines Nanoverbundmaterials mit antibakteriellen Eigenschaften nach einem der vorhergehenden Ansprüche, wobei ein Styrol-Isopren-Styrol-Tri-Block-Copolymer-Substrat in den Langmuir-Blodgett, im Folgenden als LB bezeichnet, -Trog eingebracht wird, anschließend Nanopartikel aus hydrophoben Kohlenstoff-Quantenpunkten, die in Chloroform gelöst wurden, mit einer Mikrospritze auf die Luft/Wasser-Grenzfläche eines LB-Trogs aufgetragen werden, und nach dem Verdampfen des Chloroforms die Nanopartikelschicht zu einer Monolagenphase komprimiert wird und die geordnete Monolage durch ein geregeltes Entfernen der Subphase auf das Substrat übertragen wird, wenn die Nanopartikel-Multilagen nach dem oben beschriebenen Verfahren hergestellt werden, wobei Schicht für Schicht nacheinander hinzugefügt wird.

5. Verfahren zur Herstellung eines Nanoverbundmaterials mit antibakteriellen Eigenschaften nach einem der vorstehenden Ansprüche, wobei 5 Gew.-% Toluollösung von hydrophoben Kohlenstoff-Quantenpunkten hCQD mit 10 Gew.-% Styrol-Isopren-Styrol-Triblockcopolymer, im Folgenden als Kraton bezeichnet, Lösung in dem Toluol vermischt und in eine Gussform mit der gewünschten Form gegossen werden, um monolithische Komposite zu erhalten.

6. Verfahren zur Herstellung eines Nanoverbundmaterials mit antibakteriellen Eigenschaften nach einem der vorstehenden Ansprüche, wobei Polymer und hydrophobe Kohlenstoff-Quantenpunkte hCQD in einem Heißschmelzcompounder bei einer Temperatur über dem Schmelzpunkt des ausgewählten Polymers bei einer Mischgeschwindigkeit von mindestens 30 U/min für 10 Minuten vermischt werden, anschließend die extrudierten Stränge geschnitten werden, um sie unter Verwendung einer hydraulischen Presse bei der gleichen Temperatur, wie das Heißschmelzmischen durchgeführt wurde, bei einem Druck von 1 MPa für 3 Minuten in die Form von Platten zu pressen.

7. Verfahren zur Herstellung eines Nanoverbundmaterials mit antibakteriellen Eigenschaften nach einem der vorstehenden Ansprüche, wobei Polyamidlösungen in n-Propanol mit einer Konzentration von 18 Gew.-% hergestellt werden, anschließend die kolloidale Lösung von hydrophoben Kohlenstoff-Quantenpunkten hCQDs in Chloroform verdünnt wird, dann eine Elektrospinn-Vorläuferlösung unter Verwendung von 8g Polyamidlösungen mit hCQDs kolloidaler Lösung hergestellt wird, und dann transparente Komposit-Polyamid/ hCQDs-Nanofasern durch Elektrospinnen bei Raumtemperatur mit 25 % relativer Luftfeuchtigkeit hergestellt werden und gefolgt von einer Trocknung bei Raumtemperatur im Vakuum.

8. Ein Nanoverbundmaterial mit antibakteriellen Eigenschaften, hergestellt nach einem der vorstehenden Ansprüche, **dadurch gekennzeichnet, dass** die Dicke des Films aus Kohlenstoff-Quantenpunkten 3 - 100 nm beträgt.

9. Das Nanoverbundmaterial mit antibakteriellen Eigenschaften, hergestellt nach einem der Ansprüche 1-5, **dadurch gekennzeichnet, dass** das Material nach seiner Beleuchtung mit blauem Licht im sichtbaren Bereich mit einer Wellenlänge von 420 - 470 nm antibakterielle Aktivität zeigt.

10. Das Nanoverbundmaterial mit antibakteriellen Eigenschaften nach Anspruch 8 oder 9, **dadurch gekennzeichnet, dass** das Material transparent ist.

11. Das Nanoverbundmaterial mit antibakteriellen Eigenschaften nach einem der Ansprüche 8 - 10, das für medizinische Anwendungen, Lebensmittelindustrie und industrielle pharmazeutischen Anwendungen verwendet wird.

## Revendications

1. Procédé de fabrication d'une matière nano-composite à propriété antibactérienne avec des nanoparticules de carbone CQD,
procédé **caractérisé en ce que**
- on mélange un polymère et une charge, la quantité de charge dans le mélange étant au maximum égale à 10% pondéraux et le polymère est choisi parmi ; polyamide, les acryliques, butadiène, dialkylphtalate, dimethylsiloxanes, isoprène, isobutylène, unité structurelle de styrène,
- la charge étant constituée de nanoparticules de points de carbone hydrophobes hCQD, préparées par une réaction de condensation ascendante de polyoxyéthylène-polyoxypropylène-polyoxyéthylène,
selon laquelle
- le polyoxyéthylène-polyoxypropylène-polyoxyéthylène est pris en une quantité comprise entre 2 et 10% massiques dissouts dans de l'eau,
- on mélange la solution obtenue avec le l'acide phosphorique concentré suivant une quantité allant jusqu'à deux fois plus que la quantité d'eau utilisée pour dissoudre le polyoxyéthylène-polyoxypropylène-polyoxyéthylène,
- on traite le composé à une température de 240-260°C pendant 90-240 minutes,
- on refroidit le composé à la température ambiante,
- on mélange le composant avec du toluène ou du chloroforme suivant une quantité allant jusqu'à trois fois la quantité d'eau utilisée pour dissoudre le polyoxyéthylène-polyoxypropylène-polyoxyéthylène,
- on décante le composé pour enlever l'eau, et
- on filtre le composé de nanoparticules de points de carbone hydrophobe hCQD dissoutes dans du toluène ou du chloroforme.

2. Procédé de fabrication d'un composite nanoparticules à propriétés antibactériennes selon la revendication 1,
selon lequel
les nanoparticules de points de carbone hCQD sont déposées comme film à la surface du polymère sous la forme d'un film.

3. Procédé de fabrication d'un composite nanoparticules à propriétés antibactériennes selon la revendication 1,
selon lequel
les nanoparticules de points de carbone hCQD sont incorporées dans le polymère.

4. Procédé de fabrication d'un composite nanoparticules à propriétés antibactériennes selon l'une quelconque des revendications précédentes,
selon lequel
on place un substrat d'un copolymère tri-bloc styrène-isoprène-styrène, dans le film Langmuir-Blodgett, (appelé ci-après film LB), on projette les nanoparticules de carbone hydrophobe dissoutes dans le chloroforme dans l'interface air/eau du film LB avec une micro-seringue et après évaporation du chloroforme, on comprime la couche de nanoparticules en une monocouche de phase et on transfère la monocouche ordonnée au substrat par l'enlèvement régulé de la sous-phase, les multicouches de nanoparticules étant préparées en utilisant le procédé ci-dessus, en ajoutant couche par couche, l'une à l'autre.

5. Procédé de fabrication d'un composite nanoparticules à propriétés antibactériennes selon l'une quelconque des revendications précédentes,
selon lequel
5% pondéraux de la solution de toluène de nanoparticules de carbone hydrophobe hCQD sont mélangées à 10% pondéraux de copolymère tri-bloc styrène-isoprène-styrène appelé ci-après kraton, solution dans le tolène et versée dans un moule de forme voulue pour obtenir des composites monolytiques.

6. Solution d'un matériau nano-composite propriété antibactérienne selon l'une quelconque des revendications précédentes,
selon lequel
on mélange le polymère et les nanoparticules de carbone hydrophobe hCQD pour former un mélange chaud composé à une température supérieure au point de fusion du polymère choisi à une vitesse de mélange d'au moins 30 tours par minute pendant 10 minutes, puis on extrude en filets coupés pour être pressés sous la forme de feuilles en utilisant une presse hydraulique à la même température que le mélange fondu chaud à une pression de 1 MP pendant 3 minutes.

7. Procédé de fabrication d'un composite nanoparticules à propriétés antibactériennes selon l'une des revendications précédentes,
selon lequel
on prépare des solutions de polyamide dans n-propanol à une concentration de 18% pondéraux puis on dilue la solution coloïdale de nanoparticules de carbone hydrophobe hCQDs dans du chloroforme puis on effectue un électrofilage de la solution précurseur en utilisant 8g de solution polyamide pour la solution coloïdale hCQDs, puis on produit une polyamide composite transparente hCQDs de nanofibres par électrofilage à température ambiante à 25% d'humidité relative, suivie de séchage à température ambiante sous vide.

8. Matière nanocomposite ayant des propriétés antibactériennes fabriquée selon l'une quelconque des revendications précédentes,
**caractérisée en ce que**
l'épaisseur du film de nanoparticules de points de carbone est de 3-100 nm.

9. Procédé de fabrication d'un composite nanoparticules à propriétés antibactériennes selon l'une des revendications 1 à 5,
**caractérisé en ce que**
le matériau présente une activité antibactérienne après éclairage par le de la lumière bleue dans le domaine visible, ayant une longueur d'onde de 420-470 nm.

10. Procédé de fabrication d'un composite nanoparticules à propriétés antibactériennes selon la revendication 8 ou 9,
**caractérisé en ce que**
la matière est transparente.

11. Procédé de fabrication d'un composite nanoparticules à propriétés antibactériennes selon l'une quelconque des revendications 8 à 10, utilisé pour des applications médicales, l'industrie alimentaire et l'industrie pharmaceutique.
